# EUROPEAN PATENT APPLICATION

(11) **EP 4 431 638 A1**
(43) Date of publication of application: **18.09.2024**
(21) Application number: 22889749.2
(22) Date of filing: 14.10.2022
(51) Int. Cl.: C25B 1/02, C25B 9/00, C25B 9/23, C25B 13/05, C25B 13/08, C25B 15/08, H01M 8/04

(54) **COMPRESSION APPARATUS**

(30) Priority: 08.11.2021 JP 2021181762
(71) Applicant: Panasonic Intellectual Property Management Co., Ltd., Kadoma-shi, Osaka 571-0057 (JP)
(72) Inventor: SAKAI, Osamu, Kadoma-shi, Osaka 571-0057 (JP); KAKUWA, Takashi, Kadoma-shi, Osaka 571-0057 (JP); NAKAUE, Takayuki, Kadoma-shi, Osaka 571-0057 (JP)
(74) Representative: Grünecker Patent- und Rechtsanwälte PartG mbB
(86) International application number: PCT/JP2022/038376
(87) International publication number: WO 2023/079926

(57) **Abstract**

A compression apparatus includes an electrolyte membrane, an anode disposed on a principal surface of the electrolyte membrane, a cathode disposed on another principal surface of the electrolyte membrane, and a voltage applicator that applies a voltage between the anode and the cathode. Upon the voltage applicator applying a voltage between the anode and the cathode, the compression apparatus causes protons extracted from an anode fluid fed to the anode to move to the cathode through the electrolyte membrane and produces compressed hydrogen. The compression apparatus includes a face seal disposed on an outer periphery of the anode and an elastic material interposed between the anode and the face seal.

## Description

### Technical Field

The present disclosure relates to a compression apparatus.

### Background Art

Because of environmental issues, such as global warming, and energy problems, such as exhaustion of petroleum resources, great attention has been focused on hydrogen as a clean alternative energy resource to fossil fuel. High expectations have been placed on hydrogen as clean energy, since hydrogen basically produces only water, does not produce carbon dioxide, which contributes to global warming, and substantially does not produce nitrogen oxides when combusted. Examples of apparatuses that use hydrogen as a fuel at high efficiencies include fuel cells, which have been developed and become popular for use in automobile power sources and household self-power generation.

For example, hydrogen used as a fuel for fuel cell vehicles is commonly stored in a hydrogen tank included in the vehicle at high pressures, that is, while compressed to several tens of megapascal. The high-pressure hydrogen is commonly produced by compressing low-pressure (normal pressure) hydrogen with a mechanical compression apparatus.

In the coming hydrogen society, there is a demand for the development of the technology for storing the hydrogen at high densities in order to transport or use the hydrogen at small volume and low costs, as well as the technology for producing hydrogen. In particular, it is necessary to upgrade hydrogen feed infrastructures for accelerating the popularization of fuel cells. There have been proposed various methods in which high-purity hydrogen is produced, purified, and stored at high densities in order to feed hydrogen consistently.

For example, PTL 1 proposes an electrochemical hydrogen pump that purifies and pressurizes hydrogen included in a hydrogen-containing gas by applying a predetermined voltage between an anode and a cathode that are provided with an electrolyte membrane interposed therebetween. Hereinafter, a multilayer body constituted by a cathode, an electrolyte membrane, and an anode is referred to as "membrane electrode assembly (MEA)". The hydrogen-containing gas fed to the anode may contain impurities. For example, the hydrogen-containing gas may be a hydrogen gas discharged from an iron-making factory or the like as a by-product or a reformed gas produced by reforming town gas.

For example, PTL 2 proposes a differential pressure water electrolyzer that produces low-pressure hydrogen by electrolysis of water and pressurizes the low-pressure hydrogen using MEAs.

### Citation List

### Patent Literature

PTL 1: International Publication No. 2021/140778
PTL 2: Japanese Patent No. 6129809

### Summary of Invention

### Technical Problem

An object of the present disclosure is, for example, to provide a compression apparatus that may reduce the likelihood of an electrolyte membrane hanging down into a gap between an anode and a face seal due to the gas pressure of hydrogen in a cathode, compared with the related art.

### Solution to Problem

A compression apparatus according to an aspect of the present disclosure is an apparatus including an electrolyte membrane, an anode disposed on a principal surface of the electrolyte membrane, a cathode disposed on another principal surface of the electrolyte membrane, and a voltage applicator that applies a voltage between the anode and the cathode, wherein, upon the voltage applicator applying a voltage between the anode and the cathode, the compression apparatus causes protons extracted from an anode fluid fed to the anode to move to the cathode through the electrolyte membrane and produces compressed hydrogen, the compression apparatus including a face seal disposed on an outer periphery of the anode, and an elastic material interposed between the anode and the face seal.

### Advantageous Effects of Invention

The compression apparatus according to an aspect of the present disclosure may reduce the likelihood of the electrolyte membrane hanging down into a gap between the anode and the face seal due to the gas pressure of hydrogen in the cathode, compared with the related art.

### Brief Description of Drawings

[Fig. 1] Fig. 1 is a diagram illustrating an example of an electrochemical hydrogen pump according to a first embodiment.
[Fig. 2] Fig. 2 is a diagram illustrating an example of an electrochemical hydrogen pump according to a second embodiment.
[Fig. 3A] Fig. 3A is a diagram illustrating an example of a method for assembling members that constitute an electrochemical cell included in an electrochemical hydrogen pump.
[Fig. 3B] Fig. 3B is a diagram illustrating an example of the method for assembling members that constitute an electrochemical cell included in an electrochemical hydrogen pump.
[Fig. 3C] Fig. 3C is a diagram illustrating an example of the method for assembling members that constitute an electrochemical cell included in an electrochemical hydrogen pump.
[Fig. 3D] Fig. 3D is a diagram illustrating an example of the method for assembling members that constitute an electrochemical cell included in an electrochemical hydrogen pump.
[Fig. 3E] Fig. 3E is a diagram illustrating an example of the method for assembling members that constitute an electrochemical cell included in an electrochemical hydrogen pump.
[Fig. 3F] Fig. 3F is a diagram illustrating an example of the method for assembling members that constitute an electrochemical hydrogen pump.
[Fig. 4] Fig. 4 is a diagram illustrating an example of an electrochemical hydrogen pump according to a first modification example of the second embodiment.
[Fig. 5] Fig. 5 is a magnified view of the A-part of Fig. 4.
[Fig. 6] Fig. 6 is a diagram illustrating an example of an electrochemical hydrogen pump according to a second modification example of the second embodiment.
[Fig. 7] Fig. 7 is a diagram illustrating an example of an electrochemical hydrogen pump according to a third embodiment.
[Fig. 8] Fig. 8 is a diagram illustrating an example of an electrochemical hydrogen pump according to a fourth embodiment.

### Description of Embodiments

A technique in which a circular face seal is disposed in an electrochemical hydrogen pump so as to surround the anode when viewed in plan in order to seal gaps between members constituting the region in which a low-pressure anode fluid is present is proposed in PTL 1.

However, in the case where the face seal is arranged along the periphery of the anode, for example, when viewed in plan, a circular gap is present between the outer end surface of the anode and the inner end surface of the face seal on the basis of the relationship between the dimensional tolerances of the two members. In such a case, when an electrolyte membrane arranged to extend over the outer end surface of the anode and the inner end surface of the face seal is pressed by a predetermined pressing force, the electrolyte membrane may hang down into the above gap and consequently become ruptured.

Even in the case where, for example, an adhesive is disposed in the gap between the outer end surface of the anode and the inner end surface of the face seal, the adhesive may detach due to the pressing force and, as a result, the electrolyte membrane may become ruptured.

The inventors of the present disclosure conducted extensive studies, consequently found that the above issues can be mitigated by arranging an elastic material in the gap between the outer end surface of the anode and the inner end surface of the face seal, and conceived the following aspects of the present disclosure.

Specifically, a compression apparatus according to a first aspect of the present disclosure is an apparatus including an electrolyte membrane, an anode disposed on a principal surface of the electrolyte membrane, a cathode disposed on another principal surface of the electrolyte membrane, and a voltage applicator that applies a voltage between the anode and the cathode. Upon the voltage applicator applying a voltage between the anode and the cathode, the compression apparatus causes protons extracted from an anode fluid fed to the anode to move to the cathode through the electrolyte membrane and produces compressed hydrogen. The compression apparatus includes a face seal disposed on the outer periphery of the anode, and an elastic material interposed between the anode and the face seal.

The above-described structure allows the compression apparatus according to this aspect to reduce the likelihood of the electrolyte membrane hanging down into a gap between the anode and the face seal due to the gas pressure of hydrogen in the cathode, compared with the related art. Specifically, in the case where the elastic material is arranged in the gap between the outer end surface of the anode and the inner end surface of the face seal, when the gas pressure of hydrogen acts to compress the elastic material, the elastic material becomes elastically deformed to expand in a horizontal direction perpendicular to the primary compression direction while a predetermined stress is applied onto the outer end surface of the anode and the inner end surface of the face seal in the horizontal direction. This conversely reduces the formation of a gap between the anode and the elastic material and a gap between the elastic material and the face seal. Consequently, in the compression apparatus according to this aspect, the likelihood of the electrolyte membrane hanging down into the above gap can be reduced. This reduces the possibility of rupture of the electrolyte membrane.

A compression apparatus according to a second aspect of the present disclosure, which is based on the compression apparatus according to the first aspect, may include a sheet material disposed on the anode. The sheet material may be bonded to the anode, the elastic material, and the face seal with an adhesive disposed on the anode, the elastic material, and the face seal.

According to the above-described structure, in the compression apparatus according to this aspect, the anode, the elastic material, and the face seal are bonded to the sheet material with an adhesive disposed on the anode, the elastic material, and the face seal. This improves the assembly workability of the compression apparatus.

Specifically, for example, in the case where the outer end surface of the anode is bonded to the inner end surface of the elastic material with an adhesive and the outer end surface of the elastic material is bonded to the inner end surface of the face seal with an adhesive, a sufficient degree of adhesiveness may fail to be achieved between the above members because of, for example, the size of the elastic material.

Accordingly, in the compression apparatus according to this aspect, the anode, the elastic material, and the face seal are bonded to the sheet material in the above-described manner. This reduces the likelihood of the anode, the elastic material, and the face seal detaching from the surface of the sheet material even when the sheet material is turned upside down such that the rear surface of the sheet material faces upward after the above members have been stacked on the surface of the sheet material. Consequently, the assembly workability of the compression apparatus can be improved.

In a compression apparatus according to a third aspect of the present disclosure, which is based on the compression apparatus according to the second aspect, the adhesive may be disposed on the anode and the elastic material so as to extend between the anode and the elastic material.

According to the above-described structure, in the compression apparatus according to this aspect, an adhesive is disposed on the anode and the elastic material so as to extend between the anode and the elastic material. This allows the adhesive to enter the voids formed in the porous anode and enables the anode and the elastic material to be bonded to each other while the gap therebetween is filled with the adhesive. Accordingly, in the compression apparatus according to this aspect, the likelihood of the elastic material detaching from the surface of the sheet material is low compared with the case where the adhesive is not disposed on the anode and the elastic material so as to extend between the anode and the elastic material.

In a compression apparatus according to a fourth aspect of the present disclosure, which is based on the compression apparatus according to the second aspect, the adhesive may be disposed on the anode, the elastic material, and the face seal so as to extend over the elastic material.

According to the above-described structure, in the compression apparatus according to this aspect, even in the case where it is difficult to bond the elastic material to the sheet material with an adhesive because of the properties of the material constituting the elastic material, arranging an adhesive on the anode, the elastic material, and the face seal so as to extend over the elastic material enables the anode and the face seal to be bonded to the sheet material with the adhesive in one piece. In this case, the elastic material, the anode, and the face seal can be integrated into one piece while the elastic material is interposed between the anode and the face seal. Accordingly, in the compression apparatus according to this aspect, the likelihood of the elastic material detaching from the surface of the sheet material is low compared with the case where the adhesive is not disposed on the anode, the elastic material, and the face seal so as to extend over the elastic material.

A compression apparatus according to a fifth aspect of the present disclosure, which is based on the compression apparatus according to the first aspect, may include a sheet material disposed on the anode. The sheet material may be an anode separator including an anode channel formed therein, the anode channel through which the anode fluid flows.

A compression apparatus according to a sixth aspect of the present disclosure, which is based on the compression apparatus according to the first aspect, may include a sheet material disposed on the anode, and an anode separator formed on the sheet material, the anode separator including an anode channel formed therein, the anode channel through which the anode fluid flows.

In a compression apparatus according to a seventh aspect of the present disclosure, which is based on any one of the compression apparatuses according to the first to sixth aspects, the elastic material may be a fluorine rubber.

Among various types of rubbers, a fluorine rubber has suitable properties in terms of chemical stability, such as acid resistance. Therefore, it is advantageous to use a fluorine rubber as a material constituting the elastic material.

A compression apparatus according to an eighth aspect of the present disclosure, which is based on any one of the compression apparatuses according to the second to seventh aspects, may include a sheet material disposed on the anode. The sheet material may be a metal sheet.

In a compression apparatus according to a ninth aspect of the present disclosure, which is based on any one of the compression apparatuses according to the first to eighth aspects, the face seal may include a metal sheet.

In a compression apparatus according to a tenth aspect of the present disclosure, which is based on the compression apparatus according to the eighth or ninth aspect, the metal sheet may be SUS316 or SUS316L.

Among various types of stainless steels, SUS316 and SUS316L have suitable properties in terms of acid resistance, hydrogen embrittlement resistance, and the like. Therefore, it is advantageous to use SUS316 or SUS316L as a material constituting the metal sheet.

In a compression apparatus according to an eleventh aspect of the present disclosure, which is based on any one of the compression apparatuses according to the first to tenth aspects, the anode may include a porous metal sheet or a porous carbon sheet.

In a compression apparatus according to a twelfth aspect of the present disclosure, which is based on any one of the compression apparatuses according to the second to fourth aspects, the adhesive may be a gap-fill adhesive.

According to the above-described structure, in the compression apparatus according to this aspect, even when a gap is present between the anode, the elastic material, and the face seal and the sheet material, the above members can be bonded to one another in a suitable manner while the above gap is filled with the gap-fill adhesive.

In a compression apparatus according to a thirteenth aspect of the present disclosure, which is based on any one of the compression apparatuses according to the second to fourth aspects, the adhesive may be an anaerobic adhesive.

According to the above-described structure, in the compression apparatus according to this aspect, since the anaerobic adhesive becomes cured under exclusion of air, it is possible to maintain a certain amount of time to perform positioning of the anode, the elastic material, and the face seal and the sheet material when the above members are bonded to one another. This improves the assembly workability with which the above members are arranged on the sheet material.

In a compression apparatus according to a fourteenth aspect of the present disclosure, which is based on any one of the compression apparatuses according to the second to fourth aspects, the adhesive does not necessarily include a metal ion component.

If the sulfonic groups included in the electrolyte membrane are modified with a metal ion, the electrolyte membrane may become degraded. In the compression apparatus according to this aspect, an adhesive that does not include a metal ion component is used as an adhesive for bonding the anode, the elastic material, and the face seal to the sheet material. This reduces the above risk.

Embodiments of the present disclosure are described with reference to the attached drawings below. The following embodiments are merely illustrative of examples of the foregoing aspects. Therefore, the values, shapes, materials, components, the arrangement of the components, the connections between the components, etc. are merely examples and do not limit the above-described aspects unless otherwise specified in the claims. Among the components described below, components that are not described in the independent claims, which indicate the highest concepts of the aspects, are described as optional components. The description of components denoted by the same reference numeral in the drawings may be omitted. In the drawings, components are illustrated schematically for ease of comprehension; the shapes of the components, the dimensional ratio between the components, etc. are not always accurate.

### (First Embodiment)

Various types of gases and liquids may be used as an anode fluid of the compression apparatuses according to the above-described aspects. For example, in the case where the compression apparatus is an electrochemical hydrogen pump, examples of the anode fluid include a hydrogen-containing gas. For example, in the case where the compression apparatus is a water electrolyzer, examples of the anode fluid include liquid water. In the following embodiment, the structure of an electrochemical hydrogen pump, which is an example of the compression apparatus in which the anode fluid is a hydrogen-containing gas, and the action of the electrochemical hydrogen pump are described.

### [Apparatus Structure]

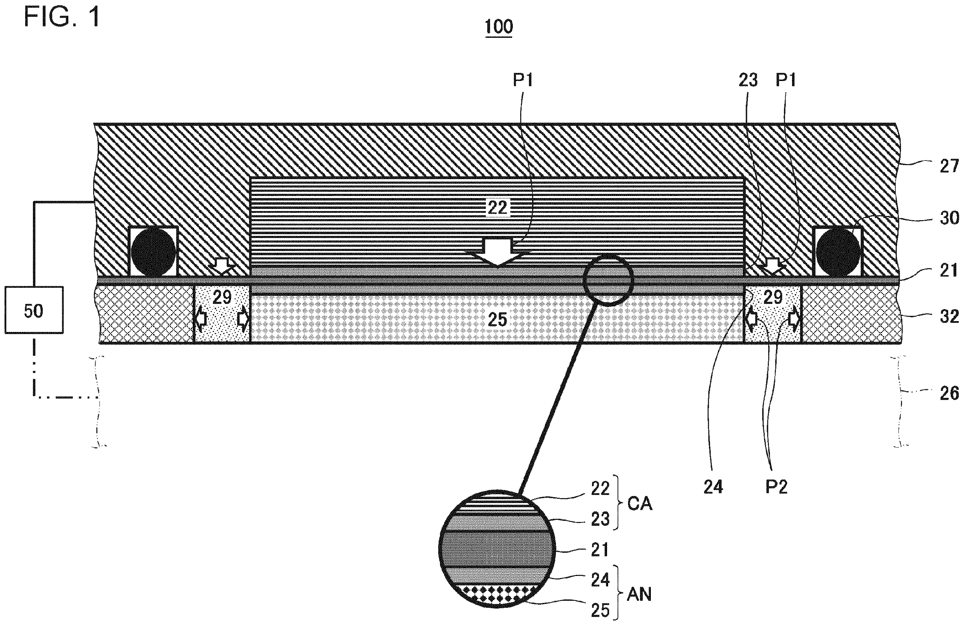

Fig. 1 is a diagram illustrating an example of the electrochemical hydrogen pump according to a first embodiment.

In the example illustrated in Fig. 1, an electrochemical hydrogen pump 100 includes an electrolyte membrane 21, an anode AN, a cathode CA, a cathode separator 27, an anode separator 26, an elastic material 29, a face seal 32, and a voltage applicator 50. An electrochemical cell included in the electrochemical hydrogen pump 100 is constituted by the electrolyte membrane 21, an anode catalyst layer 24, a cathode catalyst layer 23, an anode power feeder 25, a cathode power feeder 22, the anode separator 26, and the cathode separator 27, which are stacked on top of one another. The electrochemical hydrogen pump 100 may include a stack constituted by a plurality of the above-described electrochemical cells stacked on top of one another.

The electrochemical hydrogen pump 100 is an apparatus that causes the voltage applicator 50 to apply a voltage between the anode AN and the cathode CA, causes protons (H⁺) extracted from a hydrogen-containing gas fed to the anode AN to move to the cathode CA through the electrolyte membrane 21, and produces compressed hydrogen (H₂).

The above hydrogen-containing gas may be a hydrogen gas produced using a water electrolyzer which is not illustrated in the drawings or a reformed gas produced using a reforming device which is not illustrated in the drawings.

Details of the voltage applicator 50, which is used for the application of the voltage, are described below.

The anode AN is disposed on one of the principal surfaces of the electrolyte membrane 21. The anode AN is an electrode including the anode catalyst layer 24 and the anode power feeder 25. The cathode CA is disposed on the other principal surface of the electrolyte membrane 21. The cathode CA is an electrode including the cathode catalyst layer 23 and the cathode power feeder 22. Thus, the electrolyte membrane 21 is sandwiched between the anode AN and the cathode CA so as to come into contact with the anode catalyst layer 24 and the cathode catalyst layer 23.

The electrolyte membrane 21 may be any membrane having protonic conductivity. Examples of the electrolyte membrane 21 include a fluorine-based polymer electrolyte membrane and a hydrocarbon electrolyte membrane. Specific examples of the electrolyte membrane 21 include, but are not limited to, Nafion (registered trademark, produced by Du Pont) and Aciplex (registered trademark, produced by Asahi Kasei Corporation).

The anode catalyst layer 24 is disposed on one of the principal surfaces of the electrolyte membrane 21. The anode catalyst layer 24 includes, but does not necessarily include, carbon on which a catalyst metal (e.g., platinum) can be supported in a dispersed state.

The cathode catalyst layer 23 is disposed on the other principal surface of the electrolyte membrane 21. The cathode catalyst layer 23 includes, but does not necessarily include, carbon on which a catalyst metal (e.g., platinum) can be supported in a dispersed state.

As for both cathode catalyst layer 23 and anode catalyst layer 24, various methods may be used for producing the catalyst; the method for producing the catalyst is not limited. Examples thereof which are carbon powders include powders of graphite, carbon black, and conductive active carbon. The method for supporting platinum or another catalyst metal on a carbon carrier is not limited. For example, powder mixing, liquid-phase mixing, and the like may be used. Examples of the latter method, that is, liquid-phase mixing, include a method in which a carrier, such as carbon, is dispersed in a catalyst component colloidal liquid and adsorption is performed. The state in which a catalyst metal, such as platinum, is supported on a carbon carrier is not limited. For example, the catalyst metal may be formed into fine particles, which are supported on the carrier in a highly dispersed state.

The cathode power feeder 22 is disposed on the cathode catalyst layer 23. The cathode power feeder 22 is composed of a porous material and has electrical conductivity and gas diffusibility. The cathode power feeder 22 desirably has a certain degree of elasticity that enables the cathode power feeder 22 to appropriately follow the displacement and deformation of the components which may occur during the operation of the electrochemical hydrogen pump 100 due to the pressure difference between the cathode CA and the anode AN. Examples of the substrate for the cathode power feeder 22 include a porous carbon sheet. In this case, examples of the porous carbon sheet include, but are not limited to, a carbon fiber sintered sheet. Examples of the substrate for the cathode power feeder 22 also include a sheet composed of a sintered body of metal fibers produced using titanium, a titanium alloy, or a stainless steel as a raw material.

The anode power feeder 25 is disposed on the anode catalyst layer 24. The anode power feeder 25 is composed of a porous material and has electrical conductivity and gas diffusibility. The anode power feeder 25 desirably has a certain stiffness capable of withstanding the pressure of the electrolyte membrane 21 which is caused due to the above pressure difference during the operation of the electrochemical hydrogen pump 100. Examples of the substrate for the anode power feeder 25 include a porous metal sheet and a porous carbon sheet. In this case, examples of the porous carbon sheet include, but are not limited to, a carbon particle sintered sheet. Examples of the porous metal sheet include, but are not limited to, a sintered sheet composed of titanium particles which is coated with a noble metal, such as platinum.

The anode separator 26 is a member disposed on the anode AN. The cathode separator 27 is a member disposed on the cathode CA. A recess is formed at the center of the cathode separator 27. The cathode power feeder 22 is accommodated in the recess.

An optional sheet material that fixes the anode AN, the elastic material 29, and the face seal 32 in place may be interposed between the anode AN, the elastic material 29, and the face seal 32 and the anode separator 26. The above sheet material is not necessarily interposed therebetween. Details of the former structure are described in the third embodiment below. Details of the latter structure are described in the fourth embodiment below.

The face seal 32 is a member disposed on the outer periphery of the anode AN. Specifically, as illustrated in Fig. 1, among the components of the MEA included in the electrochemical cell, only the electrolyte membrane 21 is arranged to extend toward the outside from the recess of the cathode separator 27 over the circular gap between the outer end surface of the anode AN and the inner end surface of the face seal 32. The extension of the electrolyte membrane 21 is sandwiched between the face seal 32 and the peripheral portion of the cathode separator 27. In addition, the elastic material 29 is interposed between the anode AN and the face seal 32. That is, when Fig. 1 is viewed in plan, the circular face seal 32 is arranged to surround the outer periphery of the anode AN with the above gap being interposed therebetween, and the circular elastic material 29 is accommodated in the gap.

The elastic material 29 is composed of a material having a lower stiffness than the face seal 32 or the anode power feeder 25 and capable of elastic deformation when a predetermined load is applied to the elastic material 29 during the operation of the electrochemical hydrogen pump 100. Examples of such a material include a rubber. Specific examples thereof include, but are not limited to, a fluorine rubber. Note that it is advantageous to use a fluorine rubber as a material constituting the elastic material 29, since, among various types of rubbers, a fluorine rubber has suitable properties in terms of chemical stability, such as acid resistance.

Thus, the anode AN and the cathode CA can be sealed appropriately with an O-ring 30 disposed in a groove formed in the peripheral portion of the cathode separator 27 and the face seal 32. Furthermore, the extension of the electrolyte membrane 21 appropriately reduces the risk of short circuit between the cathode separator 27 and the anode separator 26 inside the electrochemical cell.

The face seal 32 may be composed of an elastic material. In order to enhance stiffness, an elastic material may be disposed on both surfaces of a metal sheet made of titanium, a stainless steel, or the like. Examples of the elastic material include a rubber. Specific examples thereof include, but are not limited to, a fluorine rubber.

The anode separator 26 and the cathode separator 27 may be composed of a metal sheet made of titanium, a stainless steel, or the like.

In the case where the above metal sheet is composed of, for example, an inexpensive stainless steel, it is desirable to select SUS316 or SUS316L. This is because, among various types of stainless steels, SUS316 and SUS316L are excellent in terms of acid resistance, hydrogen embrittlement resistance, etc.

The above-described MEA is sandwiched between the cathode separator 27 and the anode separator 26 in the above-described manner to form an electrochemical cell.

Although not illustrated in Fig. 1, the electrochemical hydrogen pump 100 is provided with members necessary for the hydrogen compression action of the electrochemical hydrogen pump 100 as needed.

The electrochemical hydrogen pump 100 includes a pair of end plates disposed on the respective ends in the stacking direction of the electrochemical cells and fasteners that fasten the end plates in the above stacking direction.

The fasteners may be any fasteners capable of fastening a plurality of the electrochemical cells and the pair of end plates in the above stacking direction. Examples of the fasteners include bolts and nuts with conical spring washer. Thus, in the electrochemical hydrogen pump 100 according to this embodiment, the electrochemical cells are appropriately held by the fastening pressure of the fasteners in the above stacking direction, while stacked on top of one another. This enhances the sealing capability of the sealing members (e.g., the O-ring 30 and the face seal 32) interposed between the members constituting the electrochemical cells to an adequate degree and reduces the contact resistance between the members.

The end plates have an anode gas entry pathway formed therein at an appropriate position. The anode gas entry pathway may be constituted by, for example, a pipe through which the hydrogen-containing gas, which is fed to the anode AN, flows. The anode gas entry pathway is communicated with a cylindrical anode gas entry manifold. The anode gas entry manifold is constituted by a series of through-holes formed in the members constituting the electrochemical cells.

In the electrochemical hydrogen pump 100 according to this embodiment, each of the electrochemical cells has an anode gas channel and a first communicating path through which the anode gas entry manifold and the anode gas channel are communicated with each other. The anode gas channel and the first communicating path are formed in the anode AN-side principal surface of the anode separator 26.

The anode gas channel may be a serpentine channel groove that includes, for example, a plurality of U-shaped turnaround portions and a plurality of straight portions when viewed in plan and that is formed in the anode AN-side principal surface of the anode separator 26. The first communicating path may be a channel groove formed in the anode AN-side principal surface of the anode separator 26 such that the one of the ends of the anode gas channel and the anode gas entry manifold can be communicated with each other through the channel groove.

Thus, a hydrogen-containing gas fed from the anode gas entry pathway to the anode gas entry manifold is distributed to each of the electrochemical cells through the first communicating path of the electrochemical cell. While the distributed hydrogen-containing gas passes through the anode gas channel, the hydrogen-containing gas is fed from the anode power feeder 25 to the anode catalyst layer 24.

The end plates also have an anode gas delivery pathway formed therein at an appropriate position. The anode gas delivery pathway may be constituted by, for example, a pipe through which the hydrogen-containing gas, which is discharged from the anode AN, flows. The anode gas delivery pathway is communicated with a cylindrical anode gas delivery manifold. The anode gas delivery manifold is constituted by a series of through-holes formed in the members constituting the electrochemical cells.

In the electrochemical hydrogen pump 100 according to this embodiment, each of the electrochemical cells has the anode gas channel and a second communicating path through which the anode gas delivery manifold and the anode gas channel are communicated with each other. The anode gas channel and the second communicating path are formed in the anode AN-side principal surface of the anode separator 26.

The second communicating path may be a channel groove formed in the anode AN-side principal surface of the anode separator 26 such that the other end of the anode gas channel and the anode gas delivery manifold can be communicated with each other through the channel groove.

Thus, the hydrogen-containing gas that has passed through the anode gas channel of each of the electrochemical cells is fed to the anode gas delivery manifold through each second communicating path. The hydrogen-containing gases merge with one another in the anode gas delivery manifold. The merged hydrogen-containing gas is delivered to the anode gas delivery pathway.

Furthermore, in each of the electrochemical cells, the cathode separator 27 has a communicating pathway formed therein at an appropriate position, through which the inside of the recess of the cathode separator 27 and the inside of the cylindrical cathode gas delivery manifold are communicated with each other. The cathode gas delivery manifold is constituted by a series of through-holes formed in the members constituting the electrochemical cells. This enables a high-pressure hydrogen gas present on the cathode CA to be discharged to the outside of the electrochemical hydrogen pump 100 through the communicating pathway and the cathode gas delivery manifold during the operation of the electrochemical hydrogen pump 100.

The members described above but not illustrated in the drawings are examples; the members are not limited to the above-described examples.

As illustrated in Fig. 1, the electrochemical hydrogen pump 100 also includes a voltage applicator 50 that applies a voltage between the anode AN and the cathode CA. The structure of the voltage applicator 50 is not limited; the voltage applicator 50 may be any voltage applicator with which a voltage can be applied between the anode AN and the cathode CA. Specifically, a high potential-side terminal of the voltage applicator 50 is connected to the anode AN, while a low potential-side terminal of the voltage applicator 50 is connected to the cathode CA. Examples of the voltage applicator 50 include a DC-to-DC converter and an AC-to-DC converter. A DC-to-DC converter is used in the case where the voltage applicator 50 is connected to a direct-current power source, such as a solar cell, a fuel cell, or a battery. An AC-to-DC converter is used in the case where the voltage applicator 50 is connected to an alternating-current power source, such as a commercial power source. The voltage applicator 50 may be, for example, a power-type power source, which controls the voltage applied between the anode AN and the cathode CA and the current that flows between the anode AN and the cathode CA such that the power fed to the electrochemical cells of the electrochemical hydrogen pump 100 is maintained to be a predetermined value.

### [Action]

An example of the hydrogen compression action of the electrochemical hydrogen pump 100 is described below with reference to the attached drawings. The action described below may be performed by, for example, a computing circuit of a controller, which is not illustrated in the drawings, reading a control program from a memory circuit of the controller. Note that the action described below is not necessarily performed by a controller; part of the action may be performed by the operator. In the example described below, the action is controlled using a controller.

First, a low-pressure hydrogen-containing gas is fed to the anode AN of the electrochemical hydrogen pump 100 and a voltage applied by the voltage applicator 50 is fed to the electrochemical hydrogen pump 100.

Upon the application of the voltage, hydrogen molecules are split into protons and electrons in the anode catalyst layer 24 of the anode AN as a result of an oxidation reaction (Formula (1)). The protons transfers through the electrolyte membrane 21 and move into the cathode catalyst layer 23, while the electrons move into the cathode catalyst layer 23 through the voltage applicator 50.

In the cathode catalyst layer 23, hydrogen molecules are reproduced as a result of a reduction reaction (Formula (2)). It is known that, when the protons transfer through the electrolyte membrane 21, a predetermined amount of water also moves from the anode AN to the cathode CA as electro-osmosis water, accompanying with the protons.

The hydrogen (H₂) produced in the cathode CA can be compressed by increasing the pressure loss of the hydrogen delivery pathways using a flow rate regulator, which is not illustrated in the drawings. Examples of the flow rate regulator include a back pressure valve and a control valve disposed in the hydrogen delivery pathways.

Anode: Hz (low pressure) → 2H⁺ + 2e⁻ ··· (1)

Cathode: 2H⁺ + 2e⁻ → H₂ (high pressure) ··· (2)

As described above, in the electrochemical hydrogen pump 100, upon the voltage applicator 50 applying a voltage, the hydrogen included in the hydrogen-containing gas fed to the anode AN is compressed in the cathode CA. The hydrogen compression action of the electrochemical hydrogen pump 100 is performed in the above-described manner. The hydrogen compressed in the cathode CA is, for example, fed to a body that requires hydrogen, which is not illustrated in the drawings. Examples of the body that requires hydrogen include a pipe included in a hydrogen feed infrastructure, a hydrogen storage, and a fuel cell.

In the cathode CA, hydrogen is produced in a high-pressure state, that is, for example, while being compressed to several tens of megapascal. Accordingly, the gas pressure P1 of hydrogen in the cathode CA increases with the hydrogen compression action of the electrochemical hydrogen pump 100. In this state, a high pressure substantially equal to the gas pressure P1 of hydrogen acts on the entirety of the region surrounded by the O-ring 30 when Fig. 1 is viewed in plan. In other words, as illustrated in Fig. 1, a high pressure substantially equal to the gas pressure P1 of hydrogen in the cathode CA also acts on the electrolyte membrane 21 in the region that extends between the O-ring 30 and the cathode CA.

As described above, the electrochemical hydrogen pump 100 according to this embodiment may reduce the likelihood of the electrolyte membrane 21 hanging down into the circular gap when viewed in plan between the anode AN and the face seal 32 due to the gas pressure P1 of hydrogen in the cathode CA, compared with the related art. Specifically, as illustrated in Fig. 1, in the case where the elastic material 29 is arranged in the gap between the outer end surface of the anode AN and the inner end surface of the face seal 32, when the gas pressure P1 of hydrogen acts to compress the elastic material 29, the elastic material 29 becomes elastically deformed to expand in a horizontal direction perpendicular to the primary compression direction while a predetermined stress P2 is applied onto the outer end surface of the anode AN and the inner end surface of the face seal 32 in the horizontal direction. This conversely reduces the formation of a gap between the anode AN and the elastic material 29 and a gap between the elastic material 29 and the face seal 32. Consequently, in the electrochemical hydrogen pump 100 according to this embodiment, the likelihood of the electrolyte membrane 21 hanging down into the above gap can be reduced appropriately. This reduces the possibility of rupture of the electrolyte membrane 21 even when the electrolyte membrane 21 is a thin-film having a thickness of, for example, about 100 µm or less.

### (Second Embodiment)

### [Apparatus Structure]

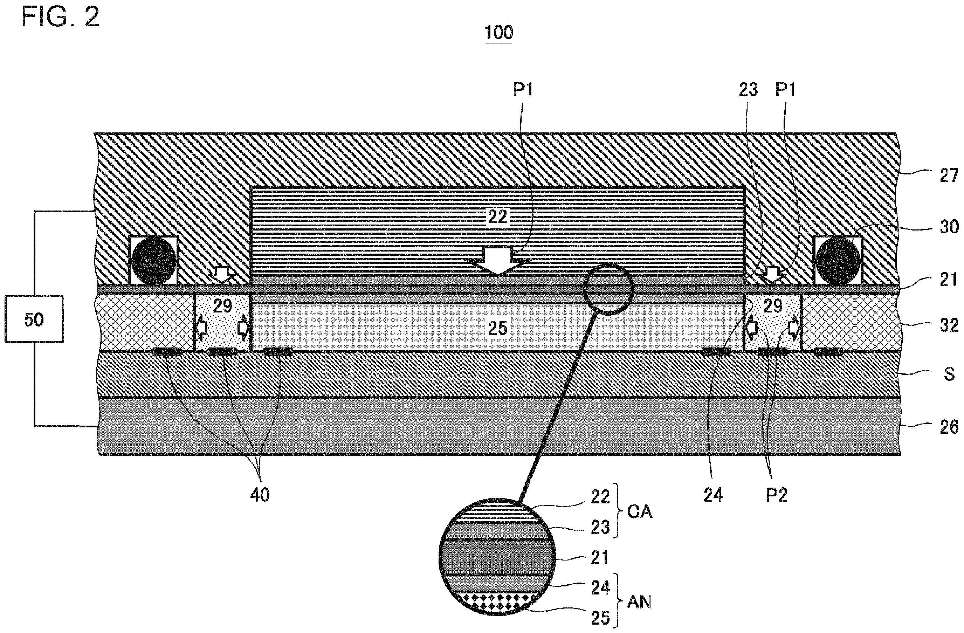

Fig. 2 is a diagram illustrating an example of the electrochemical hydrogen pump according to a second embodiment.

In the example illustrated in Fig. 2, an electrochemical hydrogen pump 100 includes an electrolyte membrane 21, an anode AN, a cathode CA, a cathode separator 27, an anode separator 26, an elastic material 29, a sheet material S, an adhesive 40, a face seal 32, and a voltage applicator 50.

Since the electrolyte membrane 21, the anode AN, the cathode CA, the cathode separator 27, the anode separator 26, the elastic material 29, the face seal 32, and the voltage applicator 50 are the same as those described in the first embodiment, the descriptions thereof are omitted herein.

The sheet material S is a member disposed on the anode AN. The electrochemical hydrogen pump 100 includes the anode separator 26 that is disposed on the sheet material S and that includes an anode gas channel formed therein, through which a hydrogen-containing gas flows. That is, the anode AN-side principal surface of the sheet material S and the principal surfaces of the anode power feeder 25, the elastic material 29, and the face seal 32 are in contact with each other. The principal surface of the sheet material S which is other than the anode AN-side principal surface is in contact with the principal surface of the anode separator 26.

In the electrochemical hydrogen pump 100 according to this embodiment, for example, a plurality of pores that penetrate the sheet material S in the thickness direction may be formed in a region of the sheet material S which comes into contact with the porous anode power feeder 25. In such a case, the hydrogen-containing gas can be fed to the anode catalyst layer 24 through the above pores and the voids formed in the porous anode power feeder 25 while the hydrogen-containing gas passes through the anode gas channel of the anode separator 26.

The sheet material S may be composed of, for example, a metal sheet made of titanium, a stainless steel, or the like. In the case where the above metal sheet is composed of, for example, an inexpensive stainless steel, it is desirable to select SUS316 or SUS316L. This is because, among various types of stainless steels, SUS316 and SUS316L are excellent in terms of acid resistance, hydrogen embrittlement resistance, etc.

The anode AN, the elastic material 29, and face seal 32 are bonded to the sheet material S with an adhesive 40 disposed on the anode AN, the elastic material 29, and the face seal 32.

The structure of the adhesive 40 is not limited; any adhesive capable of bonding the anode AN, the elastic material 29, and the face seal 32 to the sheet material S may be used.

For example, the adhesive 40 may be a gap-fill adhesive. In such a case, even if a gap is present between the anode AN, the elastic material 29, and the face seal 32 and the sheet material S, in the electrochemical hydrogen pump 100 according to this embodiment, the above members can be bonded to one another in a suitable manner while the gap is filled with the gap-fill adhesive.

The adhesive 40 may be an anaerobic adhesive. In such a case, since the anaerobic adhesive becomes cured under exclusion of air, in the electrochemical hydrogen pump 100 according to this embodiment, it is possible to maintain a certain amount of time to perform positioning of the anode AN, the elastic material 29, and the face seal 32 and the sheet material S when the above members are bonded to one another. This improves the assembly workability with which the above members are arranged on the sheet material S.

The adhesive 40 does not necessarily include a metal ion component. If the sulfonic groups included in the electrolyte membrane 21 are modified with a metal ion, the electrolyte membrane 21 may become degraded. In the electrochemical hydrogen pump 100 according to this embodiment, an adhesive that does not include a metal ion component is used as an adhesive for bonding the anode AN, the elastic material 29, and the face seal 32 to the sheet material S. This reduces the above risk.

Examples of the above-described adhesive 40 include, but are not limited to, an anaerobic gap-fill adhesive (e.g., LOCTITE 638 (registered trademark) produced by Henkel Japan Ltd.). This adhesive (LOCTITE 638 (registered trademark)) is suitable for bonding metals to each other but not suitable for bonding fluorine rubbers or the like to each other. Therefore, in the case where the adhesive (LOCTITE 638 (registered trademark)) is used as an adhesive 40, it is advantageous to use a metal sheet as a sheet material S as described above.

### [Method for Assembling Members Constituting Electrochemical Cell]

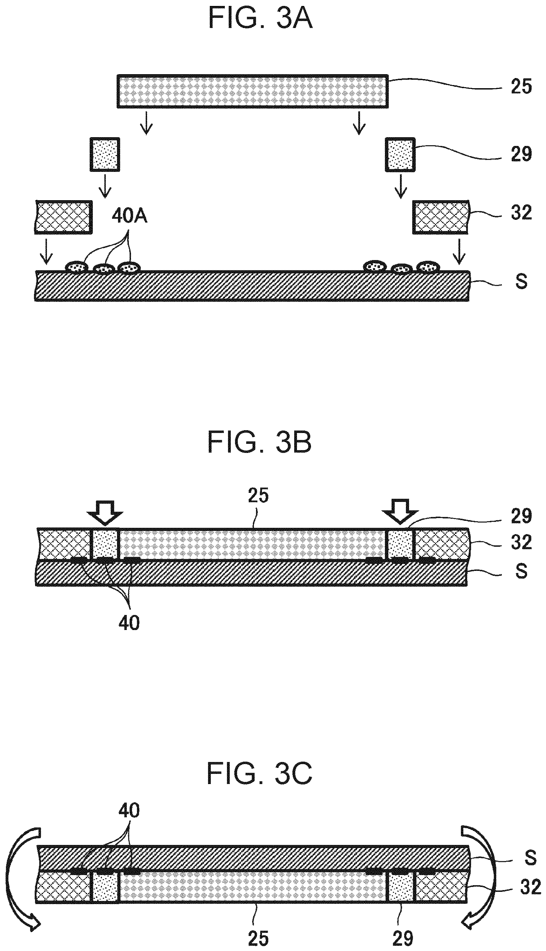

An example of the method for assembling the members constituting electrochemical cells of the electrochemical hydrogen pump 100 is described with reference to Figs. 3A to 3F below.

First, a sheet material S is placed on a workbench not illustrated in the drawings with the surface of the sheet material S facing upward. Subsequently, as illustrated in Fig. 3A, an adhesive 40A that has not been cured is applied onto the surface of the sheet material S a plurality of times (in this example, three times) in a circular pattern at predetermined intervals with an adhesive coater not illustrated in the drawings. The anode power feeder 25, the elastic material 29, and the face seal 32 are placed on the surface of the sheet material S while positioning is performed on the adhesive 40A that has not been cured.

Subsequently, as illustrated in Fig. 3B, the anode power feeder 25, the elastic material 29, and face seal 32 placed on the surface of the sheet material S are pressed and fixed in place. As a result, air is excluded from the adhesive 40A interposed between the anode power feeder 25, the elastic material 29, and the face seal 32 and the sheet material S for a predetermined period of time. This causes the adhesive 40A to cure. Thus, the bonding of the above members using the adhesive 40 is completed. For the sake of simplicity, hereinafter, the member illustrated in Fig. 3B may be referred to as "bonded body". Note that the positions at which bonding is performed using the adhesive 40 in the bonded body are merely examples; the bond positions are not limited to the above examples. Other examples are described in modification examples below.

Then, as illustrated in Fig. 3C, the sheet material S is turned upside down such that the rear surface of the sheet material S faces upward.

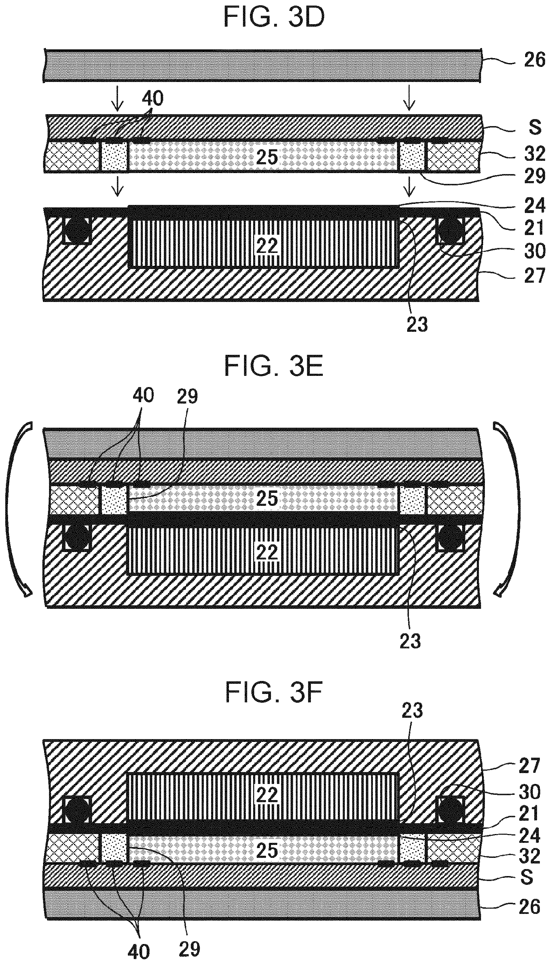

Subsequently, as illustrated in Fig. 3D, the bonded body illustrated in Fig. 3C and an anode separator 26 are placed on a multilayer body that includes a cathode separator 27, a cathode power feeder 22, and an MEA, which has been assembled on the workbench, in this order. Thus, the assembly operation of one electrochemical cell is completed as illustrated in Fig. 3E.

Finally, as illustrated in Fig. 3F, the electrochemical cell illustrated in Fig. 3E is turned upside down. Hereby, the electrochemical cell illustrated in Fig. 2 is prepared.

In the case where the number of the electrochemical cells necessary for the electrochemical hydrogen pump 100 is two or more, the assembly operation illustrated in Figs. 3A to 3E is repeated the same number of times as the number of the electrochemical cells, and the electrochemical cells stacked on top of one another, that is, a stack, is turned upside down.

As described above, in the electrochemical hydrogen pump 100 according to this embodiment, the anode AN, the elastic material 29, and the face seal 32 are bonded to the sheet material S with the adhesive 40 disposed on the anode power feeder 25, the elastic material 29, and the face seal 32. This improves the assembly workability of the electrochemical cell.

Specifically, for example, in the case where the outer end surface of the anode power feeder 25 is bonded to the inner end surface of the elastic material 29 with an adhesive and the outer end surface of the elastic material 29 is bonded to the inner end surface of the face seal 32 with an adhesive, a sufficient degree of adhesiveness between the above members may fail to be achieved because of, for example, the size of the elastic material 29. For example, in the case where the thickness of the elastic material 29 is less than about 1 mm and the width of the elastic material 29 is about 1 to 2 mm, in many cases, it becomes difficult to bond the outer end surface of the anode power feeder 25 to the inner end surface of the elastic material 29 and bond the outer end surface of the elastic material 29 to the inner end surface of the face seal 32 with an adhesive.

Accordingly, in the electrochemical hydrogen pump 100 according to this embodiment, the anode power feeder 25, the elastic material 29, and the face seal 32 are bonded to the sheet material S in the above-described manner. This reduces the likelihood of the anode power feeder 25, the elastic material 29, and the face seal 32 detaching from the surface of the sheet material S even when the sheet material S is turned upside down such that the rear surface of the sheet material S faces upward after the above members have been stacked on the surface of the sheet material S. Consequently, the assembly workability of the electrochemical cell can be improved.

The reason for which the members of the electrochemical cell are assembled in Fig. 3E in order from the cathode CA-side members to the anode AN-side members illustrated in Fig. 2 is to reduce the detachment, misalignment, and the like of the O-ring 30, the cathode power feeder 22, and the MEA. Specifically, since the members included in the bonded body are bonded to one another with the adhesive 40, the detachment, misalignment, and the like of the members of the bonded body are not likely to occur even in the case where the bonded body is placed on the multilayer body including the cathode separator 27, the cathode power feeder 22, and the MEA as illustrated in Fig. 3D. Consequently, the assembly workability of the electrochemical cell can be improved.

The electrochemical hydrogen pump 100 according to this embodiment may be the same as the electrochemical hydrogen pump 100 according to the first embodiment, except the above-described features.

### (First Modification Example)

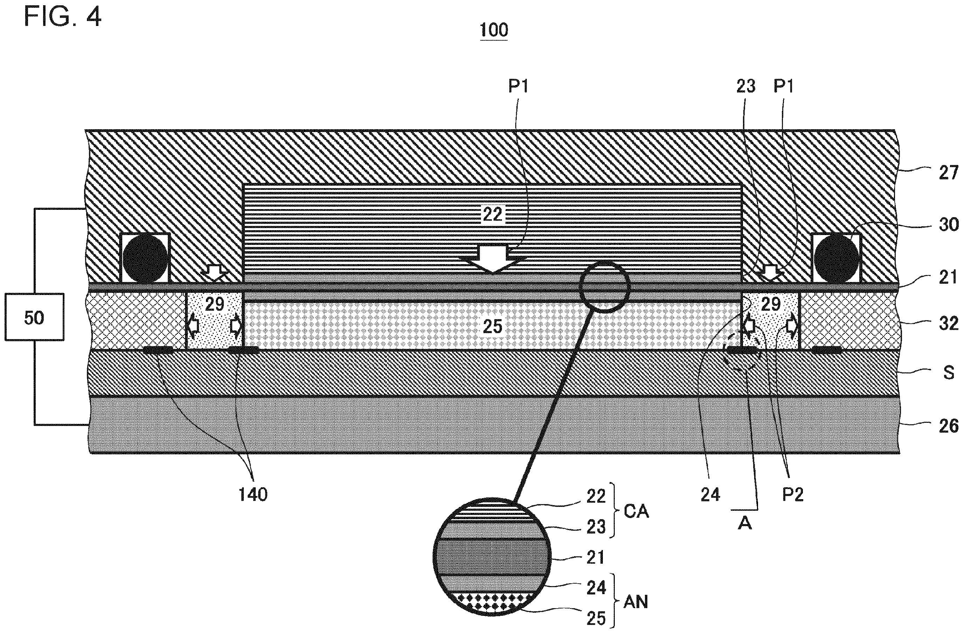

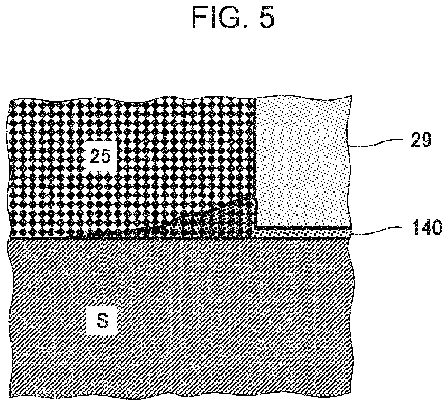

Fig. 4 is a diagram illustrating an example of the electrochemical hydrogen pump according to a first modification example of the second embodiment. Fig. 5 is a magnified view of the A-part of Fig. 4.

Note that the electrochemical hydrogen pump 100 according to this modification example is the same as the electrochemical hydrogen pump 100 according to the second embodiment, except the positions at which bonding is performed using an adhesive 140, which are described below. For example, similarly to the adhesive 40, the adhesive 140 may be either a gap-fill adhesive or an anaerobic adhesive and does not necessarily include a metal ion component.

The adhesive 140 is disposed on the anode power feeder 25 and the elastic material 29 so as to extend between the anode power feeder 25 and the elastic material 29. Specifically, as illustrated in Fig. 4, the adhesive 140 is arranged to extend on the principal surfaces of the anode power feeder 25 and the elastic material 29 so as to cover the region extending between the outer end surface of the anode power feeder 25 and the inner end surface of the elastic material 29.

Thus, in the electrochemical hydrogen pump 100 according to this modification example, the adhesive 140 is disposed on the anode power feeder 25 and the elastic material 29 so as to extend between the anode power feeder 25 and the elastic material 29. This allows the adhesive 140 to enter the voids formed in the porous anode power feeder 25 as illustrated in Fig. 5 and enables the anode AN and the elastic material 29 to be bonded to each other while the gap therebetween is filled with the adhesive 140. Accordingly, in the electrochemical hydrogen pump 100 according to this modification example, the likelihood of the elastic material 29 detaching from the surface of the sheet material S is low compared with the case where the adhesive is not disposed on the anode power feeder 25 and the elastic material 29 so as to extend between the anode power feeder 25 and the elastic material 29.

The electrochemical hydrogen pump 100 according to this modification example may be the same as the electrochemical hydrogen pump 100 according to the first or second embodiment, except the above-described features.

### (Second Modification Example)

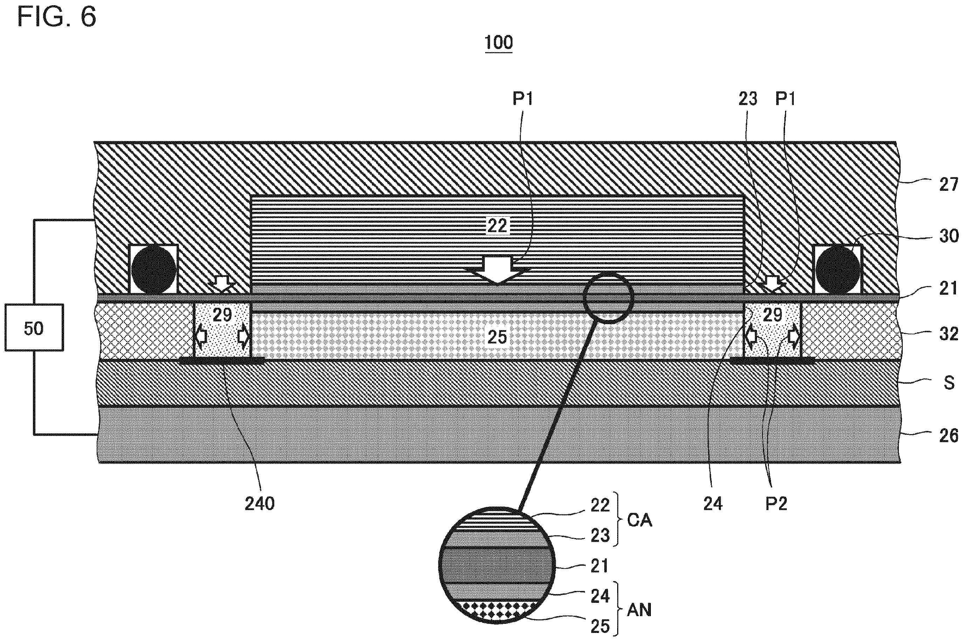

Fig. 6 is a diagram illustrating an example of the electrochemical hydrogen pump according to a second modification example of the second embodiment.

Note that the electrochemical hydrogen pump 100 according to this modification example is the same as the electrochemical hydrogen pump 100 according to the second embodiment, except the positions at which bonding is performed using an adhesive 240, which are described below. For example, similarly to the adhesive 40, the adhesive 240 may be either a gap-fill adhesive or an anaerobic adhesive and does not necessarily include a metal ion component.

The adhesive 240 is disposed on the anode power feeder 25, the elastic material 29, and the face seal 32 so as to extend over the elastic material 29. Specifically, as illustrated in Fig. 6, the adhesive 240 is arranged to extend on the principal surfaces of the anode power feeder 25, the elastic material 29, and the face seal 32 so as to cover the region extending between the outer end surface of the anode power feeder 25 and the inner end surface of the elastic material 29 and the region extending between the outer end surface of the elastic material 29 and the inner end surface of the face seal 32.

Thus, in the electrochemical hydrogen pump 100 according to this modification example, even in the case where it is difficult to bond the elastic material 29 to the sheet material S with the adhesive 240 due to the properties of the material constituting the elastic material 29, arranging the adhesive 240 on the anode power feeder 25, the elastic material 29, and the face seal 32 so as to extend over the elastic material 29 enables the anode power feeder 25 and the face seal 32 to be bonded to the sheet material S with the adhesive 240 in one piece. In this case, the elastic material 29, the anode power feeder 25, and the face seal 32 can be integrated into one piece while the elastic material 29 is interposed between the anode power feeder 25 and the face seal 32. Accordingly, in the electrochemical hydrogen pump 100 according to this modification example, the likelihood of the elastic material 29 detaching from the surface of the sheet material S is low compared with the case where the adhesive 240 is not disposed on the anode power feeder 25, the elastic material 29, and the face seal 32 so as to extend over the elastic material 29.

The above-described anaerobic gap-fill adhesive (e.g., LOCTITE 638 (registered trademark)) is suitable for bonding metals to each other but not suitable for bonding fluorine rubbers or the like to each other. Therefore, in the case where the elastic material 29 is composed of a fluorine rubber, it is desirable to arrange the adhesive 240 on the anode power feeder 25, the elastic material 29, and the face seal 32 so as to extend over the elastic material 29 as in this modification example.

The electrochemical hydrogen pump 100 according to this modification example may be the same as the electrochemical hydrogen pump 100 according to any of the first and second embodiments and the first modification example of the second embodiment, except the above-described features.

### (Third Embodiment)

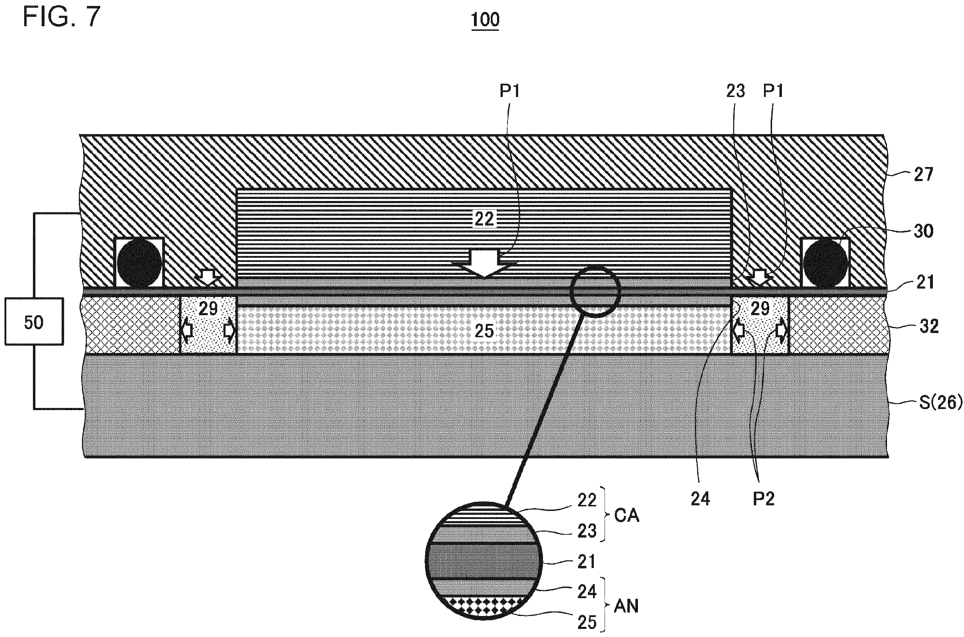

Fig. 7 is a diagram illustrating an example of the electrochemical hydrogen pump according to a third embodiment.

The electrochemical hydrogen pump 100 according to this embodiment is the same as the electrochemical hydrogen pump 100 according to the first embodiment, except the structures described below.

A sheet material S disposed on the anode AN is an anode separator 26 that includes an anode gas channel formed therein, through which a hydrogen-containing gas flows. That is, the principal surfaces of the anode power feeder 25, the elastic material 29, and the face seal 32 are in contact with the principal surface of the anode separator 26.

Since the action and advantageous effects of the electrochemical hydrogen pump 100 according to this embodiment are the same as those of the electrochemical hydrogen pump 100 according to the first embodiment, descriptions thereof are omitted herein.

The electrochemical hydrogen pump 100 according to this modification example may be the same as the electrochemical hydrogen pump 100 according to any of the first and second embodiments and the first and second modification examples of the second embodiment, except the above-described features. For example, although the adhesive described in the second embodiment is not illustrated in Fig. 7, the adhesive may be disposed on the anode separator 26 illustrated in Fig. 7.

### (Fourth Embodiment)

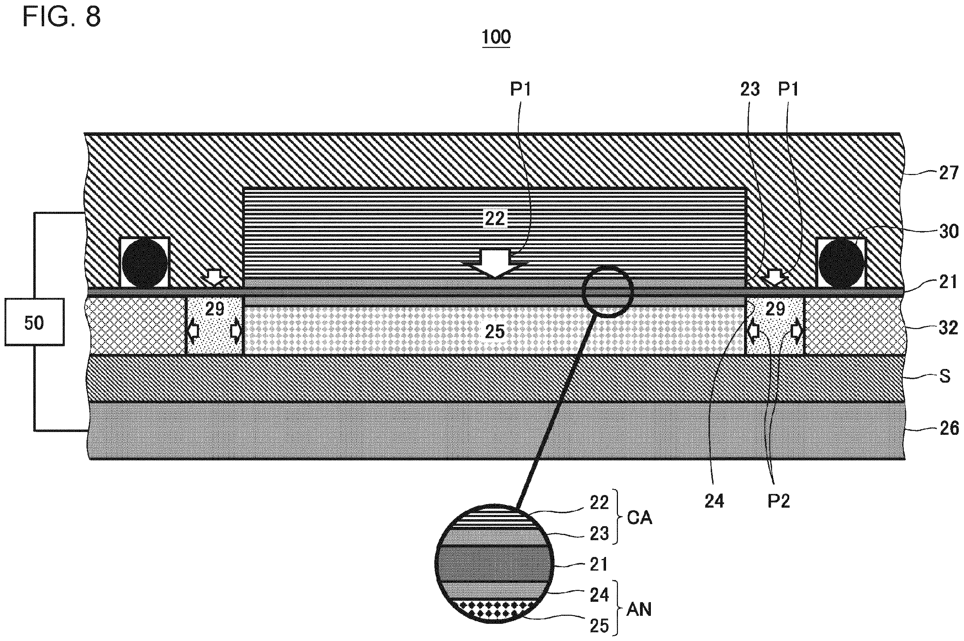

Fig. 8 is a diagram illustrating an example of the electrochemical hydrogen pump according to a fourth embodiment.

The electrochemical hydrogen pump 100 according to this embodiment is the same as the electrochemical hydrogen pump 100 according to the first embodiment, except the structures described below.

The sheet material S is a member disposed on the anode AN. The electrochemical hydrogen pump 100 includes an anode separator 26 that is formed on the sheet material S and that includes an anode gas channel formed therein, through which a hydrogen-containing gas flows. That is, the anode AN-side principal surface of the sheet material S is in contact with the principal surfaces of the anode power feeder 25, the elastic material 29, and the face seal 32. The principal surface of the sheet material S which is other than the anode AN-side principal surface is in contact with the principal surface of the anode separator 26.

In the electrochemical hydrogen pump 100 according to this embodiment, for example, a plurality of pores that penetrate the sheet material S in the thickness direction may be formed in a region of the sheet material S which comes into contact with the porous anode power feeder 25. In such a case, the hydrogen-containing gas can be fed to the anode catalyst layer 24 through the above pores and the voids formed in the porous anode power feeder 25 while the hydrogen-containing gas passes through the anode gas channel of the anode separator 26.

Since the action and advantageous effects of the electrochemical hydrogen pump 100 according to this embodiment are the same as those of the electrochemical hydrogen pump 100 according to the first embodiment, descriptions thereof are omitted herein.

The electrochemical hydrogen pump 100 according to this embodiment may be the same as the electrochemical hydrogen pump 100 according to any of the first and second embodiments and the first and second modification examples of the second embodiment, except the above-described features.

The first embodiment, the second embodiment, the first and second modification examples of the second embodiment, the third embodiment, and the fourth embodiment may be combined with one another as long as the combined embodiments do not contradict with each other.

From the foregoing description, various modifications and other embodiments of the present disclosure are obvious to one skilled in the art. Therefore, the foregoing description should be interpreted only as an example and is provided for the purpose of teaching the best mode for carrying out the present disclosure to one skilled in the art. The structural and/or functional details may be substantially altered without departing from the spirit of the present disclosure. For example, the electrochemical hydrogen pump 100 may be applied to other compression apparatuses, such as a water electrolyzer.

### Industrial Applicability

The aspects of the present disclosure can be used for a compression apparatus that may reduce the likelihood of the electrolyte membrane hanging down into the gap between the anode and the face seal due to the gas pressure of hydrogen in the cathode, compared with the related art.

### Reference Signs List

- 21: : electrolyte membrane
- 22: : cathode power feeder
- 23: : cathode catalyst layer
- 24: : anode catalyst layer
- 25: : anode power feeder
- 26: : anode separator
- 27: : cathode separator
- 29: : elastic material
- 30: : O-ring
- 32: : face seal
- 40: : adhesive
- 40A: : adhesive
- 50: : voltage applicator
- 100: : electrochemical hydrogen pump
- 140: : adhesive
- 240: : adhesive
- AN: : anode
- CA: : cathode
- P1: : gas pressure
- P2: : stress
- S: : sheet material

## Claims

1. A compression apparatus comprising:
an electrolyte membrane;
an anode disposed on a principal surface of the electrolyte membrane;
a cathode disposed on another principal surface of the electrolyte membrane; and
a voltage applicator that applies a voltage between the anode and the cathode, wherein, upon the voltage applicator applying a voltage between the anode and the cathode, the compression apparatus causes protons extracted from an anode fluid fed to the anode to move to the cathode through the electrolyte membrane and produces compressed hydrogen, the compression apparatus comprising
a face seal disposed on an outer periphery of the anode, and
an elastic material interposed between the anode and the face seal.

2. The compression apparatus according to claim 1, further comprising a sheet material disposed on the anode,
wherein the sheet material is bonded to the anode, the elastic material, and the face seal with an adhesive disposed on the anode, the elastic material, and the face seal.

3. The compression apparatus according to claim 2, wherein the adhesive is disposed on the anode and the elastic material so as to extend between the anode and the elastic material.

4. The compression apparatus according to claim 2, wherein the adhesive is disposed on the anode, the elastic material, and the face seal so as to extend over the elastic material.

5. The compression apparatus according to claim 1, further comprising a sheet material disposed on the anode,
wherein the sheet material is an anode separator including an anode channel formed therein, the anode channel through which the anode fluid flows.

6. The compression apparatus according to claim 1, further comprising a sheet material disposed on the anode, and
an anode separator formed on the sheet material, the anode separator including an anode channel formed therein, the anode channel through which the anode fluid flows.

7. The compression apparatus according to any one of claims 1 to 6, wherein the elastic material is a fluorine rubber.

8. The compression apparatus according to any one of claims 2 to 7, wherein the sheet material is a metal sheet.

9. The compression apparatus according to any one of claims 1 to 8, wherein the face seal includes a metal sheet.

10. The compression apparatus according to claim 8 or 9, wherein the metal sheet is SUS316 or SUS316L.

11. The compression apparatus according to any one of claims 1 to 10, wherein the anode includes a porous metal sheet or a porous carbon sheet.

12. The compression apparatus according to any one of claims 2 to 4, wherein the adhesive is a gap-fill adhesive.

13. The compression apparatus according to any one of claims 2 to 4, wherein the adhesive is an anaerobic adhesive.

14. The compression apparatus according to any one of claims 2 to 4, wherein the adhesive does not include a metal ion component.
